(19) **Europäisches Patentamt / European Patent Office / Office européen des brevets**

(11) **EP 1 820 405 B1**

(12) # FASCICULE DE BREVET EUROPEEN

(45) Date de publication et mention de la délivrance du brevet:
**30.03.2011 Bulletin 2011/13**

(51) Int Cl.:
*A23C 9/123* *(2006.01)*        *A23C 9/13* *(2006.01)*

(21) Numéro de dépôt: **06290285.3**

(22) Date de dépôt: **20.02.2006**

(54) **Nouvelles souches de Lactobacillus Helveticus**

Neue Lactobacillus Helveticus Stämme

New strain of Lactobacillus Helveticus

(84) Etats contractants désignés:
**AT BE BG CH CY CZ DE DK EE ES FI FR GB GR HU IE IS IT LI LT LU LV MC NL PL PT RO SE SI SK TR**

(43) Date de publication de la demande:
**22.08.2007 Bulletin 2007/34**

(73) Titulaire: **Compagnie Gervais Danone**
**75009 Paris (FR)**

(72) Inventeurs:
• **Garault, Peggy**
**91310 Monthery (FR)**
• **Pierson, Anne**
**91680 Bruyères Le Chatel (FR)**
• **Gaye, Christelle**
**94300 Vincennes (FR)**
• **Degivry, Marie-Christine**
**92350 Le Plessis Robinson (FR)**
• **Saint-Denis, Thierry**
**94300 Vincennes (FR)**

(74) Mandataire: **Boulinguiez, Didier**
**Cabinet Plasseraud**
**52, rue de la Victoire**
**75440 Paris Cedex 09 (FR)**

(56) Documents cités:
**EP-A- 0 583 074        EP-A- 1 016 709**
**WO-A-2004/060073**

• YMAMOTO N ET AL: "Antihypertensive effects of different kinds of fermented milk in spontaneously hypertensive rats" BIOSCIENCE BIOTECHNOLOGY BIOCHEMISTRY, JAPAN SOC. FOR BIOSCIENCE, BIOTECHNOLOGY AND AGROCHEM, TOKYO, JP, vol. 58, no. 4, 1994, pages 776-778, XP002095348 ISSN: 0916-8451
• HATA Y ET AL: "A PLACEBO-CONTROLLED STUDY OF THE EFFECT OF SOUR MILK ON BLOOD PRESSURE IN HYPERTENSIVE SUBJECTS" AMERICAN JOURNAL OF CLINICAL NUTRITION, BETHESDA,MD, US, vol. 64, no. 5, 1996, pages 767-771, XP008022795 ISSN: 0002-9165
• MASUDA O ET AL: "ANTIHYPERTENSIVE PEPTIDES ARE PRESENT IN AORTA AFTER ORAL ADMINISTRATION OF SOUR MILK CONTAINING THESE PEPTIDES TO SPONTANEOUSLY HYPERTENSIVE RATS" JOURNAL OF NUTRITION, WISTAR INSTITUTE OF ANATOMY AND BIOLOGY, PHILADELPHIA, PA,, US, vol. 126, no. 12, 1996, pages 3063-3068, XP002920598 ISSN: 0022-3166

EP 1 820 405 B1

**Description**

La présente invention concerne de nouvelles souches de *Lactobacillus helveticus,* ainsi que leurs applications dans le domaine agro-alimentaire. Plus particulièrement, la présente invention propose des souches de *Lactobacillus helveticus* possédant de fortes capacités de productions de peptides anti-hypertension.

L'hypertension touche une part importante de la population. L'utilisation du peptide VPP (Val Pro Pro) et de peptides contenant la séquence VPP comme agents capables de réduire la pression artérielle par inhibition de l'enzyme de conversion de l'angiotensine (ACE) a été décrite dans EP 0 583 074. Un effet similaire du tripeptide IPP (Ile Pro Pro) a été également décrit dans la littérature. Ces peptides inhibent l'ACE en bloquant son site actif et l'empêchent ainsi de rendre active l'angiotensine.

Il est connu que les deux séquences VPP et IPP sont présentes dans la caséine Béta bovine et que l'hydrolyse adéquate de cette caséine (ou plus généralement du lait qui la contient) permet d'obtenir lesdits tripeptides. De nombreuses études chez l'animal et chez l'homme ont montré que l'ingestion journalière de quelques milligrammes de ces tripeptides permet de réduire efficacement la pression artérielle, en particulier chez les sujets hypertendus, réduisant d'autant le risque d'accident cardio-vasculaire.

Des peptides issus d'un lait fermenté par des *Lactobacillus helveticus* ont montré in vivo leur effet inhibiteur de l'ACE (ACEI) et ces peptides ont pu être retrouvés au niveau de l'aorte des rats ayant participé à l'étude (Masuda O. et al., 1996. J. Nutr. 126, 3063-8). D'autres études ont aussi montré plus spécifiquement une diminution de la pression artérielle chez des rats hypertendus suite à l'ingestion de peptides issus d'un lait fermenté par des *L. helveticus* (Yamamoto N. et al., 1994. Biosci. Biotech. Biochem. 58, 776-8).

Chez l'Homme, le même lait fermenté a aussi permis de diminuer la pression artérielle systolique (Hata . et al. ; 1996. Am. J. Clin. Nutr., 64, 767-71). Une étude plus récente confirme que les peptides présents dans le produit AMEAL S ® commercialisé par la société CALPIS réduisent de manière significative la pression artérielle chez des sujets ayant une pression artérielle supérieure à la normale (Mizuno et al., 2005. British Journal of Nutrition ; vol 94, issue 1, 84-91).

Dans une autre étude récente (Jauhiainen et al. ; 2005. Am. J. of Hypertension, 18 : 1600-1605) est émis l'hypothèse selon laquelle le mécanisme d'action ci-dessus cité (inhibition de l'ACE) pour expliquer l'effet antihypertenseur d'un lait fermenté par un *L. helveticus* pourrait cependant ne pas être le mécanisme d'action déterminant chez l'homme.

Une grande majorité des *Lactobacillus helveticus* est capable de produire les tripeptides IPP et VPP par fermentation de lait, mais les quantités produites peuvent être variables. EP 1 016 709 décrit un moyen de produire les tripeptides VPP et IPP par fermentation de lait à l'aide de souches de bactéries lactiques spécifiques appartenant à l'espèce *Lactobacillus helveticus.*

Toutefois, il est utile de pouvoir disposer de souches possédant des capacités à produire des quantités de tripeptides VPP et/ou IPP les plus élevées possibles.

La présente invention propose des souches possédant de telles capacités. En particulier, la présente invention propose des souches de *Lactobacillus helveticus* permettant la préparation de produits alimentaires possédant de très fortes teneurs en IPP et/ou VPP.

Par souche, on entend, au sens de la présente invention, toute culture, généralement pure, d'un micro-organisme, obtenue à partir d'une seule cellule ou d'une colonie isolée.

Par variant ou mutant d'une souche X, on entend désigner, au sens de la présente invention, toute souche obtenue à partir d'une souche de référence X. Dans le présent contexte, on utilisera plus particulièrement les termes « variant » pour désigner une souche obtenue principalement par mutation et sélection à partir d'une souche de référence X et « mutant » pour désigner plus spécifiquement une souche obtenue par des techniques de mutagénèse aléatoire ou dirigée (par exemple transformation génétique à l'aide de vecteurs), appliquées à la souche X.

Les mutants ou variants des souches selon la présente invention seront bien entendus concernés par la protection conférée par ce brevet à partir du moment où ils conservent les aspects essentiels de l'invention, notamment la capacité à produire de grandes quantités de IPP et/ou VPP.

Par souche à « phénotype fructose moins », on entend toute souche n'ayant pas la capacité à métaboliser le fructose.

Par milieu laitier, on entend tout milieu contenant des protéines de lait, par exemple un lait bovin standardisé à 4% en protéines avec de la poudre de lait bovin (écrémé ou non) ou avec du lait concentré.

Par produit laitier, au sens de la présente invention, on entend, en plus du lait, tout produit dérivé du lait, tel la crème, la crème glacée, le beurre, le fromage, le yogourt, le lait fermenté; les produits secondaires, comme le lactosérum, la caséine ainsi que divers aliments préparés contenant comme ingrédient principal du lait ou des constituants du lait. Parmi les produits laitiers, les produits laitiers fermentés comprennent entre autres les yaourts, les laits fermentés, les fromages blancs, les kéfirs, les fromages, les produits laitiers probiotiques et plus généralement tout produit laitier qui a subi au moins une étape de fermentation. Ledit lait est généralement du lait de vache, mais peut également être du lait d'autres mammifères, comme la chèvre, la brebis, la jument, la chamelle, la bufflonne.

Par produit alimentaire, au sens de la présente invention, on entend tout produit destiné à la nutrition humaine ou animale. En particulier, les produits alimentaires comprennent des produits destinés à l'alimentation des nourrissons, des enfants, des adolescents, et des adultes. Les produits alimentaires selon l'invention peuvent contenir en tout ou partie, au moins un produit laitier fermenté selon l'invention. Les produits alimentaires selon l'invention peuvent également contenir d'autres ingrédients habituellement utilisés dans l'industrie agroalimentaire, tels que des additifs, des conservateurs, des fruits ou extraits de fruits, des arômes, des colorants, des agents de texture, des céréales, des morceaux de chocolat, etc.

Par ferment, on entend, au sens de la présente invention, toute composition contenant au moins une souche vivante de micro-organisme susceptible de fermenter un milieu donné. Parmi les ferments, les ferments lactiques sont des compositions contenant au moins une souche vivante de micro-organisme susceptible de fermenter un milieu laitier.

Selon un mode de réalisation, l'invention concerne la souche de *Lactobacillus helveticus* I-3434 déposée le 25.05.05 auprès de la CNCM (Collection Nationale de Cultures de Micro-organismes), 28 rue du Docteur Roux, 75724 Paris, France, en accord avec les dispositions du Traité de Budapest.

Selon un mode de réalisation, la présente invention concerne les variants et les mutants de la souche de *Lactobacillus helveticus* 1-3434 déposée le 25.05.05 auprès de la CNCM (Collection Nationale de Cultures de Micro-organismes), 28 rue du Docteur Roux, 75724 Paris, France, en accord avec les dispositions du Traité de Budapest.

Selon un mode de réalisation, la présente invention concerne une souche de *Lactobacillus helveticus* capable, par fermentation à une température entre 25 et 40°C, plus préférentiellement entre 27 et 37°C et encore plus préférentiellement à 32°C d'un milieu laitier avec une teneur totale en protéines supérieure ou égale à 2% (p/p), préférentiellement entre 2 et 10% (p/p), plus préférentiellement entre 2,5 et 6% et encore plus préférentiellement égale à 4%, de produire les tripeptides de séquence IPP et/ou VPP en de fortes concentrations.

Un moyen d'exprimer la concentration en tripeptides de manière simple est de l'exprimer en concentration équivalent VPP [VPPeq].

On l'exprime en mg/kg : [VPPeq] = [VPP] + (9/5 x [IPP])

Ainsi, selon un mode de réalisation, les souches de *Lactobacillus helveticus* selon l'invention sont avantageusement capables, par fermentation de produire les tripeptides de séquence IPP et/ou VPP en une quantité d'au moins 60 mg, préférentiellement au moins 62 mg de VPPeq par kg de produit fermenté.

De telles quantités de VPP et/ou IPP sont généralement obtenues par fermentation par une souche selon l'invention à une température entre 25 et 40°C, préférentiellement entre 26 et 39°C, préférentiellement entre 27 et 37°C, préférentiellement entre 30 et 34°C et encore plus préférentiellement à 32°C, d'un milieu laitier avec une teneur totale en protéines supérieure ou égale à 2% (p/p), préférentiellement entre 2 et 10% (p/p), plus préférentiellement entre 2,5 et 6% (p/p) et encore plus préférentiellement égale à 4% (p/p).

Selon un mode de réalisation, les souches de *Lactobacillus helveticus* selon l'invention possèdent en outre un phénotype fructose moins. En effet, le fructose a un fort pouvoir sucrant, et est un ingrédient utile dans les produits alimentaires. Ainsi, si le fructose ne peut être dégradé par la souche de *Lactobacillus helveticus,* le produit alimentaire conserve d'excellentes propriétés organoleptiques et le pH final sera avantageusement mieux contrôlé dans le cas où le produit alimentaire contient une préparation de fruit(s), notamment des morceaux et/ou du jus de fruit(s).

Selon un mode de réalisation, la présente invention concerne un produit alimentaire, notamment produit laitier fermenté, comprenant au moins une souche de *Lactobacillus helveticus* selon l'invention.

De manière avantageuse, selon un mode de réalisation, ledit produit alimentaire contient au moins $10^6$, préférentiellement au moins $10^7$, préférentiellement au moins $10^8$ UFC/mL de bactéries *Lactobacillus helveticus* vivantes. Ainsi, le produit alimentaire selon l'invention contient une importante biomasse.

Alternativement, le produit alimentaire selon l'invention peut être thermisé, de sorte à stabiliser son pH. Un tel produit alimentaire peut également être utilisé ultérieurement comme ingrédient dans un autre produit alimentaire.

En outre, le produit alimentaire selon l'invention peut contenir des préparations de fruit(s), notamment des morceaux et/ou du jus de fruit(s).

Selon un mode de réalisation, ledit produit alimentaire contient au moins 25 mg, préférentiellement au moins 30 mg, préférentiellement au moins 35 mg, préférentiellement au moins 40 mg, préférentiellement au moins 45 mg, préférentiellement au moins 50 mg, préférentiellement au moins 55 mg, préférentiellement au moins 60 mg, préférentiellement au moins 62 mg de VPPeq par kg de produit alimentaire.

Selon un mode de réalisation, le produit alimentaire selon l'invention comprend en outre des préparations de fruit(s), notamment des morceaux et/ou du jus de fruit(s).

Avantageusement selon un mode de réalisation, le produit alimentaire selon l'invention possède des propriétés anti-hypertensives.

Selon un autre aspect, la présente invention concerne un procédé de préparation d'un produit alimentaire.

Selon un mode de réalisation, ledit procédé comprend les étapes suivantes :

■ sélectionner une matière première contenant des protéines de lait, notamment des protéines contenant les séquences peptidiques IPP et/ou VPP;
■ sélectionner au moins une souche *Lactobacillus helveticus* selon l'invention,
■ ensemencer ladite matière première avec ladite souche,
■ fermenter ladite matière première pendant 12-30 heures à 25-40°C,
■ optionnellement, thermiser le produit fermenté obtenu.

Selon un mode de réalisation, le procédé selon l'invention peut dépourvu de toute étape de thermisation après fermentation. Ceci permet de conserver des bactéries vivantes dans le produit alimentaire (pro-biotique).

Selon un autre mode de réalisation, ledit procédé peut comprendre une étape de thermisation.

L'invention sera davantage décrite à l'aide des exemples suivants, qui sont non-limitatifs.

## EXEMPLES DE REALISATION

### EXEMPLE 1 : Caractérisation d'une souche selon l'invention

La souche I-3434 a fait l'objet de dépôts auprès de la CNCM (Collection Nationale de Cultures de Micro-organismes), 28 rue du Docteur Roux, 75724 Paris, France, en accord avec les dispositions du Traité de Budapest le 25.05.05.

Cette souche a un phénotype fructose moins

### EXEMPLE 2 : Mesure des propriétés d'acidification

Les propriétés d'acidification sont évaluées comme suit :

Un milieu contenant 120g de poudre de lait écrémé (PLE) dans 930ml d'eau est pasteurisé 10min à 95°C. Ce milieu est ensemencé à 0.5%, puis soumis à fermentation à 32°C. Le pH est alors suivi en fonction du temps.

Un prélèvement de milieu fermenté effectué à 30h de fermentation sera utilisé pour les mesures de production des tripeptides IPP et VPP ainsi que pour les mesures d'activité ACEI dont les résultats seront donnés ci-dessous.

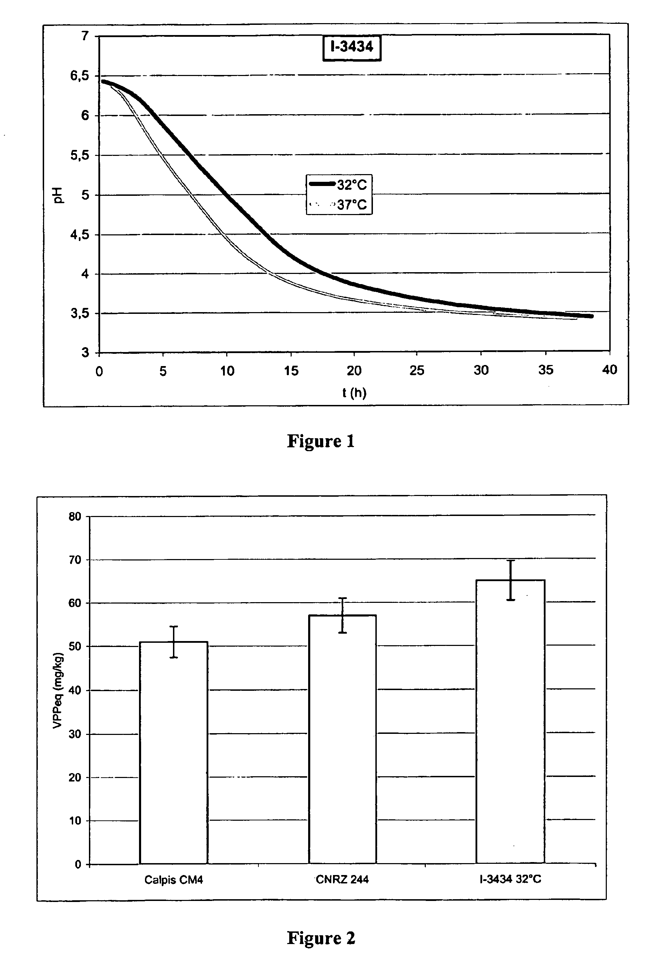

Les résultats présentés sur la figure 1 montrent les propriétés d'acidification d'une souche selon l'invention.

### EXEMPLE 3 : Mesure de la production des tripeptides IPP et VPP

Matériel et méthode

Un échantillon de milieu laitier (prélèvement à 30 heures de fermentation), tel que décrit précédemment dans l'exemple 2 est utilisé pour faire cette mesure.

L'analyse du contenu en peptides, notamment la teneur en tripeptides IPP et VPP, est conduite avec une méthode de chromatographie liquide CLHP couplée à un détecteur de type MS/MS comme décrit ci-après :

- Du fait des interférences inhérentes à l'analyse d'échantillons complexes, l'usage d'étalons internes deutérés ajoutés en quantité connue et maîtrisée au moment de la préparation de l'échantillon est fortement conseillée.

- La préparation de l'échantillon se fait par dilution du milieu fermenté dans un mélange d'eau, de méthanol et d'acide trifluoroacétique (50/50/0.1%), contenant 25 ppm d'étalon interne VPP deutéré (noté par la suite VPPd, de formule H-Val [D8]-Pro-Pro-OH, MM = 319,45 g/mol, disponible auprès de la société Bachem Chemicals, France) et 10 ppm d'étalon interne IPP deutéré (noté par la suite IPPd, de formule H-Ile [D10 N15]-Pro-Pro-OH, MM = 336,2 g/mol, disponible auprès de la société NEOMPS, Groupe SNPE, 7 rue de Boulogne, 67100 Strasbourg, France) dans un rapport de 1 à 3 (par exemple, pesée précise dans un eppendorf de 600 mg d'échantillon dans 1200 mg de mélange eau-méthanol-TFA contenant les étalons internes).

- Cet échantillon dilué est ensuite centrifugé à 14000 g pendant 15 minutes. Le surnageant clair obtenu, contenant les peptides générés pendant la fermentation, est ensuite dilué précisément au 1/50ème dans un mélange d'eau-méthanol (50/50, v/v) contenant 0,1 % d'acide trifluoroacétique.

- La solution diluée ainsi obtenue est ensuite analysée dans un système chromatographique CLHP de type Agilent 1100 (société Agilent Technologies France, 1 rue Galvani 91745 Massy cedex, France), équipé d'une colonne adaptée à l'analyse des peptides, de type Waters Biosuite® (3 mm 2.1 x 150 mm, C18 PA-A, WAT186002427, Waters France, 5, Rue Jacques Monod, 78280 Guyancourt) à la température de 50°C, débit de 0.25 ml/min. Les peptides sont élués de façon classique avec un gradient croissant de solvant B (Acétonitrile + 0.100% d'acide formique) dans le solvant A (Eau + 0.106% acide formique), sur une durée de 35 min à 2 heures en fonction de la résolution chromatographique souhaitée. La méthode adaptée au dosage des peptides IPP et VPP utilise le gradient suivant :

| Temps | % Tampon A | % Tampon B |
|-------|-----------|-----------|
| 0 | 100 | 0 |
| 3 | 96 | 4 |
| 6 | 89 | 11 |
| 15 | 60 | 40 |
| 18 | 0 | 100 |
| 21 | 100 | 0 |
| 24 | 0 | 100 |
| 27,5 | 100 | 0 |
| 35 | 100 | 0 |

- La détection se fait à l'aide d'un détecteur spécifique de type MS/MS, par exemple avec un appareil à trappe ionique comme l'Esquire3000+ (Bruker Daltonique, rue de l'Industrie, 67166 Wissembourg Cedex), paramétré en ionisation electrospray en mode positif, soit pour l'analyse globale du contenu peptidique (mode MS-MS), soit pour la quantification précise et spécifique d'un peptide à partir de ses fragments caractéristiques (mode MRM). Dans le cas du dosage des peptides IPP et VPP, mais aussi des étalons internes IPPd et VPPd, ces peptides sont isolés à partir de leur masse spécifique (ions monochargés 312,2 Da pour VPP ; 326,2 Da pour IPP ; 320,2 Da pour VPPd ; 337,3 Da pour IPPd) et quantifiés à partir de l'intensité de leurs ions spécifiques après fragmentation (fragments >= 85 Da).

L'intégration des pics chromatographiques de chacun des peptides IPP, VPP et la comparaison aux surfaces de pic des étalons internes de concentrations connues IPPd et VPPd permet ensuite de calculer, par régression linéaire simple, la teneur initiale de l'échantillon en VPP et IPP (généralement exprimée en mg/kg ou ppm).

Résultats

|  | VPPeq (mg/kg de milieu fermenté) |
|--|--|
| Calpis CM4 | 51 |
| CNRZ 244 | 57 |
| I-3434 | 62 |

La figure 2 montre une comparaison de la production en tripeptides IPP et VPP de la souche I-3434 par rapport à deux souches de l'art antérieur.

La souche CM4 de la société CALPIS est décrite dans le brevet EP 1 016 709 tandis que la souche CRNZ 244 est décrite dans la demande de brevet WO 2004/060073.

Il est clair sur cette figure que la souche I-3434 (souche selon l'invention) a une production de tripeptides IPP et VPP bien supérieure à ces deux précédentes souches dans les mêmes conditions.

<u>**EXEMPLE 4 : Mesure de l'activité ACEI (Inhibition de l'Enzyme de Conversion de l'Angiotensine)**</u>

Matériel et méthode

Un échantillon de milieu laitier (prélèvement à 30 heures de fermentation), tel que décrit précédemment dans l'exemple 2 est utilisé pour faire cette mesure.La présente méthode a pour base la méthode de Cushman et Cheng (Cushman et al. Biochem. Pharmacol. 1971. 20:1637), adaptée pour la rendre compatible avec des échantillons de type produits laitiers fermentés.

## 1. Préparation des réactifs et solutions

### 1.1 Tampon borate de sodium 0.1M pH8.3, additionné de 0.3M de NaCl

Peser 6.1843g d'$H_3BO_3$ (Carlo Erba ref:402 766). Dissoudre dans environ 800 ml d'eau déminéralisée, ajuster à pH 8,3 avec une solution de NaOH puis ajouter 12,0 g de NaCl (concentration finale 0,3 M) et compléter à 1 litre avec l'eau déminéralisée.

### 1.2 Préparation du substrat HHL : solution de Hip-His-Leu à 5mM dans tampon borate de sodium 0.1M pH8.3 avec 0.3M de NaCl

Peser exactement 42.95 mg de peptide HHL anhydre (N-Hippuryl-Histidyl-Leucine tetrahydrate PM :501.5g, Sigma-Aldrich ref:53285-250 mg) et dissoudre dans environ 15 mL de tampon borate de sodium 0.1M pH8.3 avec 0.3M de NaCl puis compléter à 20mL avec ce même tampon.

### 1.3 Préparation de la solution d'ACE à 0.1U/mL

L'enzyme de conversion de l'angiotensine sous forme de poudre lyophilisée (origine : poumons de lapin, Sigma-Aldrich ref A6778, 0.25 unités) est solubilisée dans 2.5mL de tampon borate de sodium 0,1M pH 8,3 pour obtenir une solution à 0,1 U/mL. La solution ainsi préparée doit être utilisée, stockée à 4°C, au maximum 2 semaines pour préserver une activité enzymatique suffisante.

## 2. Préparation des échantillons de lait fermenté

Il est nécessaire de conditionner l'échantillon à un pH compris entre 8.0 et 8.5 de façon à être proche du pH optimal de l'ACE. Le lait fermenté est tout d'abord centrifugé, le pH du surnageant est ensuite ajusté entre 8.0 et 8.5 (idéalement pH 8.3) puis ultrafiltré à l'aide d'unité de filtration Vivaspin avec un seuil de coupure de 10 000 Daltons (Vivascience, France) afin d'éliminer les éléments interférents (protéines entières, sels de calcium).

Le protocole complet est le suivant :

- Déposer environ 6mL de lait fermenté dans un tube falcon 15mL après avoir préalablement pesé le tube vide. Peser la quantité de lait fermenté déposée dans le tube.

- Centrifuger à 14 000g pendant 10min à 10°C.

- Récupérer le surnageant - Quantifier la proportion culot/surnageant ce qui permet si nécessaire de déterminer l'IC50 équivalente au produit d'origine et non à son seul surnageant.

- Prélever 2.0mL de surnageant dans un tube à essais et mesurer le pH.

- Ajouter le volume nécessaire de NaOH 2M afin d'obtenir un pH compris entre 8.0 et 8.5 (cible : 8.3) après ajout du tampon borate, puis agiter

- Ajouter le volume nécessaire de tampon borate pour diluer le surnageant de départ au ½ en tenant compte du volume exact de NaOH ajouté (par exemple : prise d'essai de surnageant = 2mL + 250µL NaOH + 1.75mL tampon borate)

- Vérifier que le pH final est compris entre 8.0 et 8.5. Au-delà, recommencer en ajoutant plus ou moins de NaOH. Un précipité se forme : il est dû aux sels de calcium.

- Ultracentrifuger l'échantillon à 12 000 g pendant 15 min à 10°C à l'aide d'unités de filtration Vivaspin 10 000 Daltons (capacité 4-6mL) afin d'obtenir un échantillon limpide.

## 3. Mesure de l'inhibition de l'ACE par les échantillons de laits fermentés

Lors de chaque série analyse, des témoins contrôles (0 et 100% activité ACE) doivent être préparés. Pour chaque échantillon, deux essais indépendants et un blanc échantillon sont réalisés pour chaque dilution. Il faut en effet ajuster au plus près (en diluant) la quantité d'échantillon nécessaire pour diminuer de 50% l'activité de l'ACE.

Pour cela :
- Déposer 80μL de l'échantillon conditionné à pH8.3 dans le tube blanc et dans les tubes essais
- Déposer 80μL d'eau déminéralisée dans les tubes contrôle 0 et 100%
- Ajouter 200μl de la solution de substrat HHL à 5mM dans tous les tubes. Agiter.
- Placer les tubes dans un bain d'eau thermostaté à 37°C, laisser s'équilibrer en température
- Déclencher la réaction enzymatique par ajout dans chaque tube de 20μL de la solution d'ACE à 0.1U/mL, sauf pour les blancs échantillons et contrôle 0% pour lesquels il faut déposer 20μL de tampon borate pH 8.3.
- Laisser hydrolyser pendant 1h exactement à 37°C.
- Arrêter la réaction en ajoutant dans chaque tube 250μL de la solution d'HCl 1M. Tableau récapitulatif de la composition des différents milieux réactionnels :

|  | Prise d'essai | Ajout du Substrat | Déclenchement hydrolyse |
|---|---|---|---|
| **100% contrôle** | 80μL eau déminéralisée | 200μL HHL | 20μL ACE |
| **0% contrôle** | 80μL, eau déminéralisée | 200μL HHL | 20μL tampon borate |
| **Echantillon (essai)** | 80μL échantillon | 200μL HHL | 20μL ACE |
| **Blanc échantillon** | 80μL échantillon | 200μL HHL | 20μL tampon borate |

La lecture se fait par extraction du substrat hydrolyse (acide hippurique) et sa quantification à l'aide d'un spectrophotomètre, avec le protocole suivant :

Ajouter dans chaque tube l.7mL acétate d'éthyle, agiter.
Centrifuger à 2000g pendant 5 min à 10°C
Prélever 1mL exactement du surnageant dans un micro-tube eppendorf
Evaporer l'acétate d'éthyle à 120°C pendant 10min dans un bloc chauffant
Ajouter exactement 1mL d'eau déminéralisée puis agiter 10 sec pour reprendre l'acide hippurique.
Lire l'absorbance à 228 nm dans des cuves adaptées à la lecture dans l'UV

Expression des résultats :

Le pourcentage d'inhibition de l'ACE est calculé comme suit :

$$\frac{(\text{Abs 100\% ctl} - \text{Abs 0\% ctl}) - (\text{Abs éch} - \text{Abs blanc éch})}{(\text{Abs 100\% ctl} - \text{Abs 0\% ctl})} \times 100$$

Avec

Abs = absorbance à 228 nm après extraction de l'acide hippurique
ctl = contrôle
éch = échantillon

Pour un lait fermenté, nous exprimons l'IC50 comme étant la quantité de surnageant de ce lait fermenté qui inhibe 50% de l'activité enzymatique de l'ACE dans le milieu réactionnel, soit en microlitres de surnageant de lait fermenté par millilitre de milieu réactionnel.

Résultats

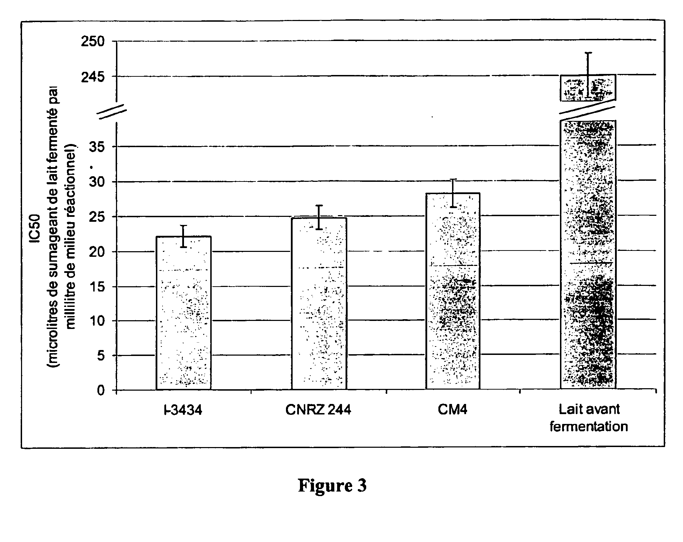

La figure 3 montre une comparaison de l'activité inhibitrice de l'enzyme de conversion de l'angiotensine des différentes souches selon la présente invention comparées à des souches de l'art antérieur.
En ordonnée est exprimée la concentration équivalente de lait fermenté par ml de milieu réactionnel nécessaire pour inhiber 50% de l'activité de l'enzyme de conversion de l'angiotensine (IC50). Plus cette concentration est élevée, moins la souche a donc de capacité à inhiber l'enzyme de conversion de l'angiotensine.

**EXEMPLE 5 : préparation d'un produit laitier (probiotique) selon l'invention**

Du lait de grand mélange, préalablement écrémé, pré-pasteurisé et refroidi à 4°C est standardisé en protéines (4.0%) avec de la poudre de lait écrémé. Le milieu laitier ainsi préparé est soumis à une pasteurisation (95°C-8 min). Après refroidissement à 32°C le milieu laitier est ensemencé avec la souche I-3434 à raison de $10^7$ UFC/ mL et maintenu à 32°C pendant toute la durée de la fermentation. Lorsque le pH 3.5 est atteint, le caillé est soutiré de la cuve de fermentation pour subir un lissage (par passage au travers d'un filtre) et refroidi jusqu'à 10°C dans un échangeur à plaque. Le caillé lissé et refroidi est ensuite additionné d'une préparation de fruits (ayant un pH entre 4 et 4,1) à raison de 15% du produit fini, conditionné en flacons de 110 mL et stocké à 4°C pendant 28 jours.

Le produit ainsi préparé contient des tripeptides de séquence IPP/VPP à raison de 62 mg/kg d'équivalent VPP. La teneur en peptides du produit est stable durant toute la durée de vie du produit.

## Revendications

**1.** Souche de *Lactobacillus helveticus* I-3434 déposée le 25.05.05 auprès de la CNCM (Collection Nationale de Cultures de Micro-organismes), 28 rue du Docteur Roux, 75724 Paris, France, en accord avec les dispositions du Traité de Budapest.

**2.** Utilisation de la souche de *Lactobacillus helveticus* selon la revendication 1, pour la préparation d'un produit alimentaire ou pharmaceutique, notamment d'un produit laitier fermenté.

**3.** Utilisation selon la revendication 2, telle que ledit produit alimentaire ou pharmaceutique a des propriétés anti-hypertensives.

**4.** Produit alimentaire, notamment produit laitier fermenté, comprenant la souche de *Lactobacillus helveticus* selon la revendication 1.

**5.** Produit alimentaire selon la revendication 4, contenant au moins $10^6$, préférentiellement au moins $10^7$, préférentiellement au moins $10^8$ UFC/mL de bactéries *Lactobacillus helveticus* vivantes.

**6.** Produit alimentaire selon l'une quelconque des revendications 4-5, contenant au moins 25 mg, préférentiellement au moins 50 mg, plus préférentiellement au moins 75 mg de VPPeq par kg dudit produit alimentaire.

**7.** Produit alimentaire selon l'une quelconque des revendications 4-6, comprenant en outre des préparations de fruit (s), notamment des morceaux et/ou du jus de fruit(s).

**8.** Produit alimentaire selon l'une quelconque des revendications 4-7, qui possède des propriétés anti-hypertensives.

**9.** Procédé de préparation d'un produit alimentaire comprenant les étapes suivantes :

- ■ sélectionner une matière première contenant des protéines de lait, notamment des protéines contenant les séquences peptidiques IPP et/ou VPP;
- ■ sélectionner la souche de *Lactobacillus helveticus* selon la revendication 1,
- ■ ensemencer ladite matière première avec ladite souche,
- ■ fermenter ladite matière première pendant 12-30 heures à 25-40°C,
- ■ optionnellement, thermiser le produit fermenté obtenu.

## Claims

**1.** A strain of *Lactobacillus helveticus* 1-3434 deposited on 25.05.05 at the CNCM (Collection Nationale de Cultures de Micro-organismes), 28 rue du Docteur Roux, 75724 Paris, France, in compliance with the Treaty of Budapest.

**2.** Use of the *Lactobacillus helveticus* strain according to claim 1, for preparing a food or pharmaceutical product, notably a fermented dairy product.

3. Use according to claim 2, are such that said food or pharmaceutical product has antihypertensive properties.

4. A food product, notably a fermented dairy product, comprising the *Lactobacillus helveticus* strain according to claim 1.

5. The food product according to claim 4, containing at least $10^6$, preferably at least $10^7$, preferably at least $10^8$ CFU/mL of live *Lactobacillus helveticus* bacteria.

6. The food product according to any one of claims 4 to 5, containing at least 25 mg, preferentially at least 50 mg, more preferentially at least 75 mg of VPPeq per kg of said food product.

7. The food product according to any one of claims 4 to 6, further comprising fruit preparations, notably fruit pieces and/or juices.

8. The food product according to any one of claims 4 to 7, which has antihypertensive properties.

9. A method for preparing a food product, comprising the following steps:

  ● selecting a raw material containing milk proteins, notably proteins containing the IPP and/or VPP peptide sequences;
  ● selecting the *Lactobacillus helveticus* strain according to claim 1,
  ● sowing said raw material with said strain,
  ● fermenting said raw material for 12 to 30 hours at 25 to 40°C,
  ● optionally thermizing the obtained fermented product.

**Patentansprüche**

1. *Lactobacillus helveticus*-Stamm 1-3434, hinterlegt am 25.05.05 bei der CNCM (Collection Nationale de Cultures de Micro-organismes), 28 rue du Docteur Roux, 75724 Paris, Frankreich, gemäß den Vorgaben des Budapester Vertrags.

2. Verwendung des *Lactobacillus helveticus*-Stamms nach Anspruch 1 zur Herstellung eines Nahrungsmittelprodukts oder pharmazeutischen Produkts, insbesondere eines fermentierten Milchprodukts.

3. Verwendung nach Anspruch 2, derart, dass das Nahrungsmittelprodukt oder pharmazeutische Produkt blutdrucksenkende Eigenschaften hat.

4. Nahrungsmittelprodukt, insbesondere fermentiertes Milchprodukt, das den *Lactobacillus helveticus*-Stamm nach Anspruch 1 umfasst.

5. Nahrungsmittelprodukt nach Anspruch 4, das mindestens $10^6$, vorzugsweise mindestens $10^7$, bevorzugt mindestens $10^8$ koloniebildende Einheiten/ml an lebenden *Lactobacillus helveticus*-Bakterien enthält.

6. Nahrungsmittelprodukt nach einem der Ansprüche 4-5, das mindestens 25 mg, vorzugsweise mindestens 50 mg, stärker bevorzugt mindestens 75 mg, VPP-Äqu. pro kg des Nahrungsmittelprodukts enthält.

7. Nahrungsmittelprodukt nach einem der Ansprüche 4-6, das außerdem Zubereitungen einer Frucht (von Früchten), insbesondere Stücke und/oder Saft einer Frucht (von Früchten) umfasst.

8. Nahrungsmittelprodukt nach einem der Ansprüche 4-7, das blutdrucksenkende Eigenschaften besitzt.

9. Verfahren zur Herstellung eines Nahrungsmittelprodukts, bei dem man:

  • ein Ausgangsmaterial auswählt, das Milchproteine, insbesondere Proteine, die die Peptidsequenzen IPP und/oder VPP enthalten, enthält,
  • den Lactobacillus helveticus-Stamm nach Anspruch 1 auswählt,
  • das Ausgangsmaterial mit dem Stamm beimpft,
  • das Ausgangsmaterial für 12-30 Stunden bei 25-40°C fermentiert,

• gegebenenfalls das erhaltene fermentierte Produkt thermisiert.

**Figure 1**

**Figure 2**

**Figure 3**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 0583074 A
- EP 1016709 A
- WO 2004060073 A

**Littérature non-brevet citée dans la description**

- **MASUDA O. et al.** *J. Nutr.,* 1996, vol. 126, 3063-8
- **YAMAMOTO N. et al.** *Biosci. Biotech. Biochem.,* 1994, vol. 58, 776-8
- **HATA et al.** *Am. J. Clin. Nutr.,* 1996, vol. 64, 767-71
- **MIZUNO et al.** *British Journal of Nutrition,* 2005, vol. 94 (1), 84-91
- **JAUHIAINEN et al.** *Am. J. of Hypertension,* 2005, vol. 18, 1600-1605
- **CUSHMAN et al.** *Biochem. Pharmacol.,* 1971, vol. 20, 1637